# FASCICULE DE BREVET EUROPEEN

(11) **EP 3 702 189 B1**
(45) Date de publication et mention de la délivrance du brevet: **26.03.2025**
(21) Numéro de dépôt: 20159118.7
(22) Date de dépôt: 24.02.2020
(51) Int. Cl.: B60K 11/08

(54) **DISPOSITIF D'AÉRATION POUR UN VÉHICULE**
BELÜFTUNGSVORRICHTUNG FÜR FAHRZEUG
VENTILATION DEVICE FOR A VEHICLE

(30) Priorité: 26.02.2019 FR 1901970
(43) Date de publication de la demande: 02.09.2020
(73) Titulaire: Flex-N-Gate France, 25405 Audincourt (FR)
(72) Inventeur: GUYON, Cyrille, 25600 NOMMAY (FR); HUNG, Joaquin, MARKHAM, ONTARIO L6C2Y9 (CA)
(74) Mandataire: Lavoix

(56) Documents cités:
- DE-A1- 102012 000 173
- FR-A1- 2 404 557
- FR-A1- 2 754 013
- FR-A1- 2 825 326
- FR-A1- 3 048 646
- JP-A- 2012 224 101

## Description

La présente invention concerne un dispositif d'aération pour un véhicule tel que défini dans le préambule de la revendication 1.

L'invention concerne plus particulièrement un dispositif d'aération destiné à gérer des flux d'air d'un véhicule automobile. Ce système peut avantageusement être utilisé pour la gestion de la température du moteur du véhicule mais il peut également être utilisé pour la gestion de l'aérodynamique du véhicule.

Un tel dispositif d'aération est, par exemple, agencé à l'avant du véhicule et fait partie de la calandre du véhicule. Le dispositif d'aération permet la gestion d'un flux d'air entrant et destiné à être en contact avec le système de refroidissement du moteur et permettant de maintenir le moteur à la température optimale de fonctionnement. Ce dispositif connu permet avantageusement de combiner une forme aérodynamique performante du véhicule et une température de fonctionnement du moteur optimale.

Les documents FR 2 754 013 A1, DE 10 2012 000173 A1 et FR 2 404 557 A1 décrivent des dispositifs d'aération connus.

Ces dispositifs d'aération sont la plupart du temps cachés derrière des grilles ou calandres.

Les dispositifs d'obturation de ces dispositifs d'aération posent des problèmes de rigidité, notamment dans le cas de volets d'obturation de grandes dimensions, c'est-à-dire de volets ayant une longueur supérieure ou égale à 350 millimètres (mm).

En outre, lorsque ces dispositifs d'obturation sont visibles de l'extérieur du véhicule, le risque de fléchissement des dispositifs d'obturations devient important du fait de la pression de l'air devenant très importante sur le dispositif d'obturation.

En effet, pour de tels volets de grandes dimensions et/ou lorsque les volets sont exposés à la pression de l'air, des problèmes d'enrayement de leur mouvement de rotation entre leur position ouverte et d'obturation peuvent se poser. Il en résulte que les volets ne présentent pas une cinématique optimale entre leur position ouverte et leur position fermée.

Pour résoudre ces problèmes, il est connu de l'état de la technique de prévoir plusieurs dispositifs d'obturation distincts ayant des volets de plus petite longueur s'étendant dans la continuité les uns des autres et ayant chacun un système de mise en rotation des volets. Le choix dans la dimension et la forme des volets est donc limité.

Ces dispositifs d'obturation sont relativement encombrants, complexes à réaliser et à monter sur le véhicule du fait de la multiplicité des pièces impliquées dans la fabrication de ces dispositifs.

En outre, ces dispositifs d'obturation peuvent dégrader l'esthétique du véhicule, la transition entre les volets adjacents étant visible, notamment lorsque ceux-ci sont visibles depuis un extérieur du véhicule alors que la volonté des constructeurs automobiles est d'adapter la calandre au style du véhicule afin que celle-ci s'intègre au mieux et de manière esthétique dans l'architecture du véhicule.

L'invention vise à pallier ces inconvénients en proposant un dispositif d'aération amélioré.

A cet effet, l'invention porte sur un dispositif d'aération du type précité tel que défini par la partie caractérisante de la revendication 1.

Le système de guidage permet de rigidifier l'ensemble du dispositif d'obturation car le système de guidage procure un point d'appui additionnel sur le cadre.

Ainsi, le système de guidage permet d'éviter l'enrayement du dispositif d'obturation. En particulier, la cinématique du dispositif d'obturation est sécurisée car le système de guidage permet une cinématique différente par rapport à la liaison pivot et qui accompagne le mouvement du dispositif d'obturation.

Grâce à l'invention, il est possible de réduire le nombre de volets. Le pilotage du dispositif d'obturation est donc simplifié.

De plus, le système d'aération est sécurisé du fait de l'utilisation d'au moins deux systèmes de rotation différents à savoir le pivotement et le déplacement guidé du pion dans la rainure de guidage.

En outre, le dispositif d'obturation permet une plus grande liberté dans le choix de la forme du volet tout en contenant l'encombrement nécessaire à la rotation des volets d'obturation.

Ainsi, le dispositif d'obturation peut s'adapter au style du véhicule de manière plus simple.

Enfin, le dispositif d'obturation est compact et permet d'être intégré dans un volume disponible limité. Cela contribue à l'intégration du dispositif d'aération dans différents types de véhicules.

Des dispositifs d'obturation connus comprennent des volets ayant une forme incurvée et des systèmes de pivots agencés dans une zone de flèche maximale de chacun des volets. Les systèmes de pivots comprennent un support d'arbre de pivotement qui relie le volet à l'axe de pivotement du volet, l'arbre de pivotement pivotant selon l'axe de pivotement du volet.

Une telle pièce de support présente une longueur importante dépendant de la flèche dans la zone où se situe la liaison pivot afin que l'arbre de pivotement soit situé sur l'axe de pivotement du volet.

Ces dispositifs d'obturation posent des problèmes d'interférence des volets et des pièces de support dans la position ouverte des volets mais également lors du changement de position entre la position ouverte et la position d'obturation. En effet, lorsque les volets sont dans la position ouverte, la partie du volet la plus éloignée de l'axe de pivotement (flèche maximale), c'est-à-dire généralement la zone centrale du volet, est susceptible d'interférer avec la pièce de support d'arbre d'un volet adjacent. Il en résulte que certains volets ne peuvent pas s'ouvrir complètement, autrement dit atteindre leur position ouverte.

Le système de guidage étant plus compact que le système de pivot avec pièce de support d'arbre, les dimensions des parties du système de guidage agencées entre les volets sont réduites et de fait, permettent d'éviter l'interférence des volets entre eux par comparaison à une liaison pivot autour d'un arbre de pivotement qui doit être situé sur l'axe de pivotement. Ainsi, les volets peuvent atteindre leur position ouverte.

Selon un mode de réalisation, le dispositif d'aération comprend en outre les caractéristiques de l'une ou plusieurs des revendications 2 à 8.

D'autres aspects et avantages de l'invention apparaitront à la lecture de la description qui suit, donnée à titre d'exemple et faite en référence aux dessins annexés parmi lesquels :
[Fig 1] la figure 1 est une vue de face d'une partie du dispositif d'aération selon l'invention,
[Fig 2] la figure 2 est une représentation en perspective et schématique du dispositif d'aération dans une position ouverte selon un premier mode de réalisation,
[Fig 3] la figure 3 est une représentation du dispositif d'aération de la figure 2 dans une position d'obturation,
[Fig 4] la figure 4 est une vue de détail d'un système de guidage du dispositif d'aération des figures 1 à 3.
[Fig 5] la figure 5 est une représentation en perspective et schématique du dispositif d'aération dans une position ouverte selon un deuxième mode de réalisation, et
[Fig 6] la figure 6 est une vue de détail en perspective d'un système de guidage de volets d'obturation du disposition d'aération de la figure 5.

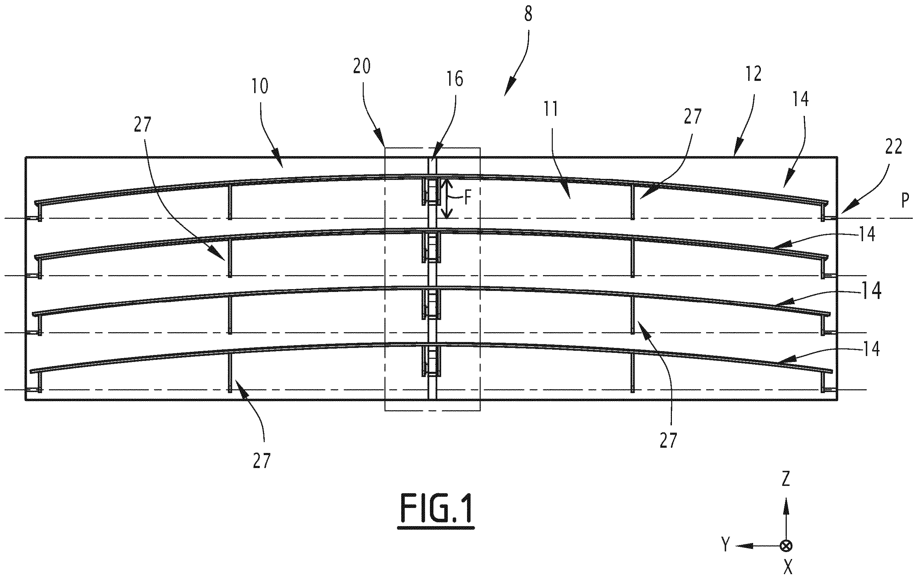

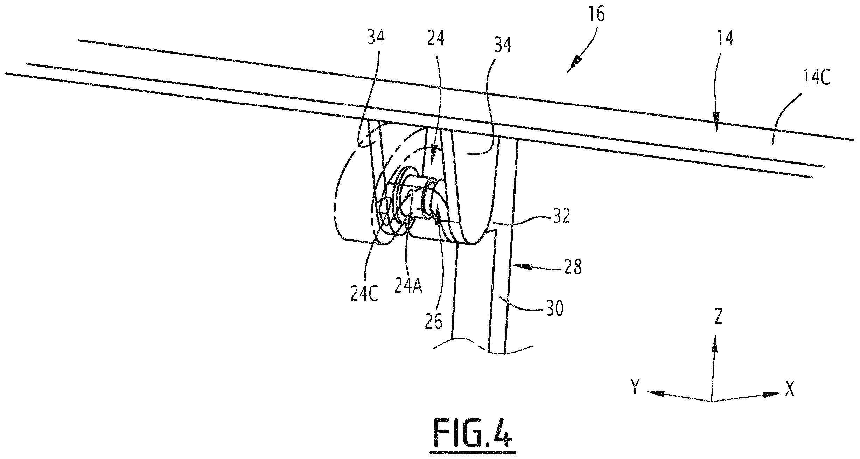

Les figures 1 à 4 représentent un premier mode de réalisation du dispositif d'aération 8 selon l'invention.

Le dispositif d'aération 8 est par exemple destiné à faire partie d'une calandre d'un véhicule pour admettre de l'air extérieur pour refroidir un dispositif de refroidissement du véhicule à travers une ouverture d'entrée d'air.

Le but est de combiner la performance aérodynamique lorsque le dispositif d'aération est fermé et la gestion de la température moteur en ouvrant le dispositif d'aération selon le besoin de refroidissement du moteur ou de tout autre système demandant une gestion thermique

Il est défini une première direction, X. Dans le présent exemple, la première direction est parallèle à un axe avant-arrière du véhicule. La première direction est notée « première direction X ».

Dans la présente description, il est aussi défini une deuxième direction parallèle aux essieux du véhicule. La deuxième direction est notée « deuxième direction Y » et correspond ainsi à la largeur du véhicule.

Enfin, il est également défini une troisième direction, perpendiculaire à la première direction X et à la deuxième direction Y. Dans le présent exemple, la troisième direction correspond à la hauteur du véhicule. La troisième direction est notée « troisième direction Z ».

Le dispositif d'aération 8 comprend un système d'obturation 10 et un cadre 12.

Le cadre 12 définit l'ouverture 11 d'entrée d'air dans le véhicule.

Selon un mode de réalisation, le cadre 12 est formé par le pare-chocs.

Ainsi, l'ouverture 11 est par exemple formée dans une peau de pare-chocs du véhicule.

En variante, le cadre 12 est formé par un module du véhicule et/ou par une pièce destinée à être monté sur le véhicule.

Le dispositif d'obturation 10 comprend au moins un volet d'obturation 14 et pour chaque volet d'obturation 14, un système de guidage 16 du volet d'obturation. Dans la suite de la description le volet d'obturation 14 peut être nommé « volet 14 ».

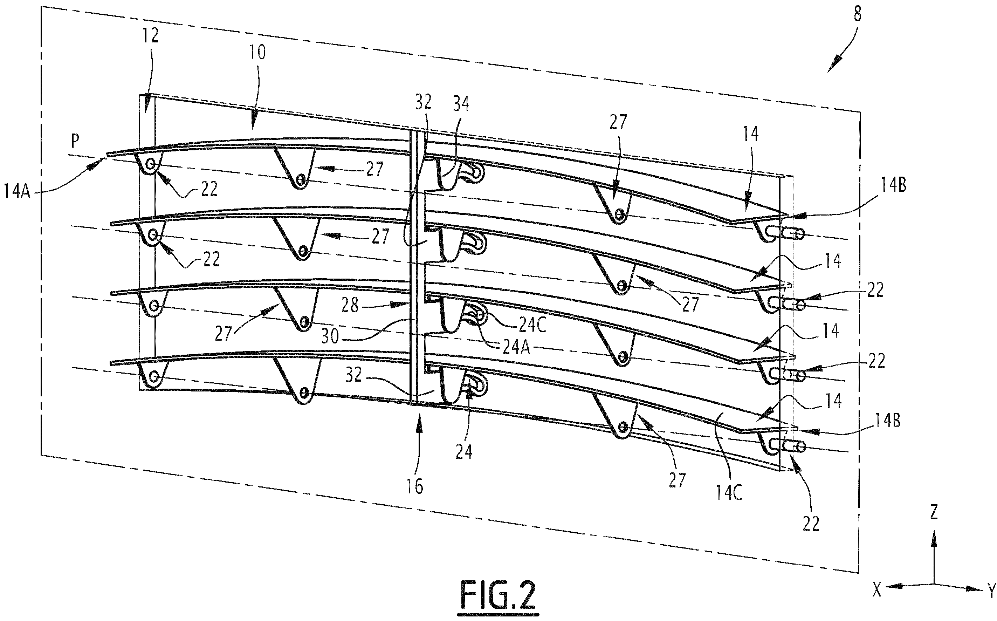

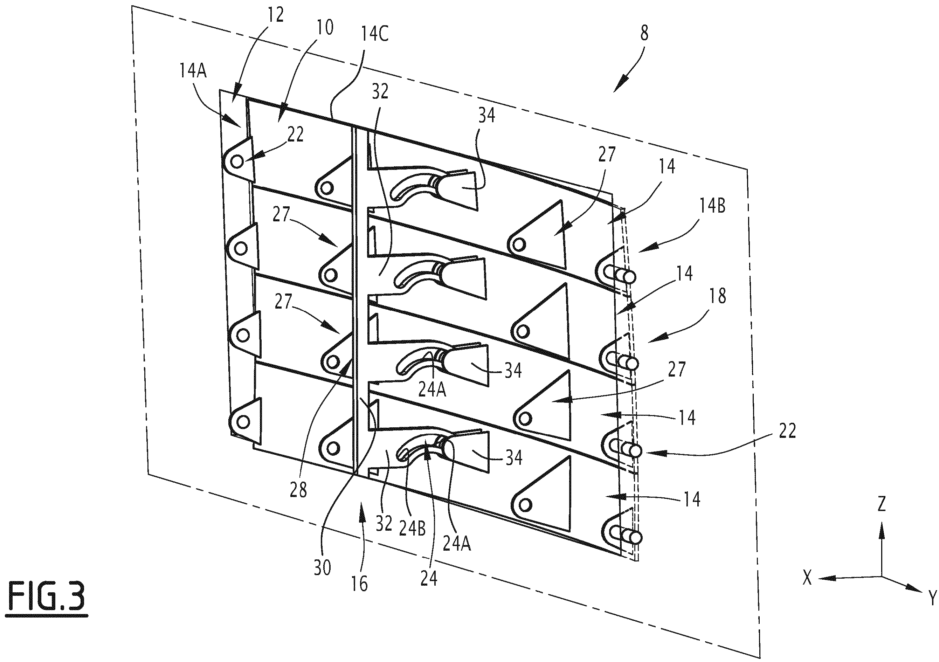

Le dispositif d'obturation 10 présente une position ouverte (visible sur les figures 1 et 2) dans laquelle l'ouverture 11 est au moins en partie ouverte de telle sorte qu'un flux d'air peut circuler au travers de l'ouverture 11, par exemple selon la première direction X lorsque le dispositif d'obturation 10 est monté sur le véhicule, et une position d'obturation (visible sur la figure 3) dans laquelle le dispositif d'obturation 10 obture au moins en partie l'ouverture 11.

Il est défini une surface de passage de l'air au travers du dispositif d'aération 8 délimité entre le cadre 12 et le dispositif d'obturation 10. Lorsque le dispositif d'obturation 10 est dans la position d'obturation, la surface de passage de l'air est inférieure à la surface de passage de l'air lorsque le dispositif d'obturation 10 est dans la position ouverte.

Selon un mode de réalisation, le flux d'air est complètement interrompu lorsque le dispositif d'obturation est dans la position d'obturation.

Dans le présent exemple de réalisation, le dispositif d'obturation 10 comprend une pluralité de volets d'obturation 14.

Par exemple, le dispositif d'obturation 10 comprend un nombre de volets compris entre 2 et 20.

Chaque volet d'obturation 14 présente une direction générale parallèle à la deuxième direction Y.

Chaque volet d'obturation 14 présente une première extrémité 14A et une deuxième extrémité 14B s'étendant le long de la deuxième direction Y.

Les volets d'obturation 14 s'étendent selon la deuxième direction Y dans l'ouverture 11. Les volets d'obturation 14 sont alors disposés les uns au-dessus des autres selon la troisième direction Z.

Chaque volet d'obturation 14 est mobile entre une position ouverte lorsque le dispositif d'obturation 10 est dans la position ouverte et une position d'obturation lorsque le dispositif d'obturation 10 est dans la position d'obturation. Les volets d'obturation 14 sont mobiles en rotation entre la position ouverte et la position d'obturation autour d'un axe de pivotement P.

L'axe de pivotement P de chaque volet 14 est, dans cet exemple, sensiblement parallèle à la deuxième direction Y.

En variante, l'axe de pivotement P d'au moins un volet 14 forme un angle non nul avec la deuxième direction Y, la première direction X et/ou la troisième direction Z.

Il est défini un angle de rotation des volets d'obturation 14 entre la position ouverte et la position d'obturation autour de l'axe de pivotement P.

Par exemple, l'angle de rotation est sensiblement égal à 90°.

Dans la position d'obturation, une face 14C des volets 14 est orientée contre la direction du flux d'air. Cela permet avantageusement d'améliorer le coefficient de trainé Cx du véhicule dans la position d'obturation.

En outre, dans la position d'obturation, l'ensemble des volets 14 définit une surface extérieure 18 du dispositif d'obturation 10, aussi appelée « peau extérieure ». La peau extérieure s'étend par exemple dans la continuité de la surface extérieure de la pièce du véhicule sur laquelle le dispositif d'obturation 10 est monté de sorte à offrir une esthétique satisfaisante du dispositif d'obturation 10 et de son environnement.

Il est entendu par « partie extérieur » une partie du dispositif d'aération 10 orientée vers l'extérieur du véhicule par opposition à une « partie intérieure » qui est une partie du dispositif d'obturation 10 orientée en direction de l'intérieur du véhicule.

Chaque volet d'obturation 14 est, dans le présent exemple, en une partie unique.

En variante, chaque volet d'obturation 14 peut comprendre plusieurs parties, par exemple deux parties ou trois parties.

Dans le cas où les volets 14 comprennent plus d'une partie, les différentes parties du volet 14 s'étendent dans la continuité l'une de l'autre selon la deuxième direction Y et les différentes parties du volet 14 sont solidaires en mouvement, c'est-à-dire qu'elles se déplacent ensemble entre la position ouverte et la position d'obturation.

Par exemple, les volets 14 sont en un polymère.

En variante, les volets 14 sont en métal.

Selon le mode de réalisation représenté sur les figures et comme plus particulièrement visible sur les figures 1 à 3, les volets d'obturation 14 présentent une forme incurvée.

Plus précisément, en section, dans un plan de coupe normal à la deuxième direction Y lorsque les volets d'obturation 14 sont dans la position ouverte, les volets d'obturation 14 présentent une forme courbe. Par exemple, les volets 14 présentent la forme d'un arc ou encore une forme concave.

En outre, comme visible sur la figure 1, les volets d'obturation 14 présentent, par exemple, en section, dans un plan de coupe normal à la première direction X lorsque les volets 14 sont dans la position ouverte, une forme courbe. Par exemple, les volets 14 présentent une forme d'arc ou encore une forme concave. Encore autrement dit, les volets 14 sont courbes selon la deuxième direction Y. Ainsi, dans le présent exemple de réalisation, d'une extrémité à l'autre extrémité de chaque volet 14 selon la deuxième direction Y lorsque ce volet 14 est dans la position ouverte, ce volet 14 présente une forme courbe.

Chaque volet 14 présente une zone de flèche maximale 20.

La flèche F du volet 14 est la distance entre l'axe de pivotement P du volet 14 et une face du volet 14. La flèche F est représentée sur la figure 1.

La zone de flèche maximale 20 correspond à la zone du volet 14 où passe une tangente au volet d'obturation 14 parallèle à l'axe de pivotement P du volet 14.

Pour chaque volet d'obturation 14, la zone de flèche maximale 20 comprend la flèche F maximale du volet 14 et se situe, par exemple, dans une portion centrale du volet 14.

Par exemple, la flèche F maximale est comprise entre 150 millimètres (mm) et 200 mm.

En outre, par exemple, le rayon de courbure du volet 14 est compris entre trois mètres et quatre mètres. A titre d'exemple particulier, les volets 14 présentent un rayon de courbure égal à quatre mètres.

Dans la présente demande si une grandeur est comprise entre des valeurs A et B, cela signifie que la grandeur est supérieure ou égale à A et inférieure ou égale à B.

En outre, les volets 14 sont des volets de grande dimension.

Un volet de grande dimension est un volet dont la longueur est supérieure ou égale à 350mm. Il est entendu par la longueur du volet, une dimension du volet 14 mesurée entre ses deux extrémités 14A, 14B selon la deuxième direction Y.

Plus généralement, dans la présente description, la longueur d'un élément donné est la dimension de cet élément donné mesuré selon la deuxième direction Y.

Par exemple, les volets présentent une longueur supérieure ou égale à 450 mm.

Un volet de grande dimension peut également être un volet dont la largeur est supérieure ou égale à 50 mm tout en présentant une longueur supérieure à 450 mm par exemple. Il est entendu par la largeur du volet 14, une dimension du volet 14 mesurée entre une arête intérieure du volet 14 et une arête extérieure du volet 14 lorsque les volets 14 sont dans la position ouverte.

A titre illustratif, la longueur du volet d'obturation 14 est comprise entre 900 mm et 1100 mm.

Dans le présent exemple de réalisation, tous les volets d'obturation 14 ont la même longueur.

Chaque volet d'obturation 14 est monté pivotant sur le cadre 12 à chacune de ses extrémités 14A, 14B selon l'axe de pivotement P.

Par exemple, le volet 14 est monté pivotant sur le cadre 12 par l'intermédiaire d'une liaison pivot 22.

Par exemple, les volets 14 sont liés en rotation.

Par exemple, le pivotement d'un volet 14 entraîne la rotation des autres volets 14.

Par exemple, les volets 14 sont des volets pilotés.

Par exemple, le dispositif d'obturation 10 comprend un module de commande (non représenté) des volets 14 destiné à piloter le pivotement des volets 14 selon l'axe de pivotement P et, en particulier, les liaisons pivot 22. Le système de guidage 16 est agencé entre les deux extrémités 14A, 14B de chaque volet d'obturation 14.

Le système de guidage 16 est agencé entre les deux extrémités 14A, 14B de chacun des volets d'obturation 14.

Le système de guidage 16 comprend, pour chaque volet d'obturation 14, une rainure de guidage 24 et un pion 26 se déplaçant dans la rainure de guidage 24 lorsque le volet d'obturation 14 se déplace entre la position ouverte et la position de d'obturation. Le système de guidage 16 comprend, en outre, un support 28.

Le support 28 est par exemple fixé au cadre 12 à chacune de ses extrémités.

En variante, le support 28 est fixé sur une pièce additionnelle distincte du cadre 12.

Le pion 26 est fixé au volet d'obturation 14, et la rainure de guidage 24 est ménagée dans le support 28, respectivement dans une pièce fixée au volet 14.

Le support 28 s'étend selon la première direction X et selon la troisième direction Z.

Plus précisément, le support 28 comprend un bras 30 s'étendant selon la troisième direction Z et, pour chaque volet 14, une branche 32 s'étendant en saillie du support 28 vers l'extérieur du véhicule le long de la première direction X.

Le bras 30 est, par exemple, fixé par ses extrémités au cadre 12.

Par exemple, la branche 32 est venue de matière avec le bras 30.

Dans le présent exemple du système de guidage 16, pour chaque volet d'obturation 14, la rainure de guidage 24 est ménagée dans le support 28, par exemple dans une branche 32 respective.

La rainure de guidage 24 forme un trou traversant, par exemple selon la deuxième direction Y.

La rainure de guidage 24 présente une surface de guidage 24A sur laquelle le pion 26 coulisse lors du déplacement du volet 14.

En section dans un plan normal à la deuxième direction Y, la rainure de guidage 24 présente une forme courbe.

La forme courbe est par exemple concave, la concavité étant tournée vers l'intérieur du véhicule.

Par exemple, la rainure de guidage 24 présente la forme d'un arc de cercle.

La courbure de la rainure de guidage 24 est par exemple fonction de la courbure du volet d'obturation 14.

La rainure de guidage 24 définit une butée d'ouverture 24B et une butée d'obturation 24C du volet d'obturation 14. Le pion 26 est agencé contre la butée d'ouverture lorsque le volet 14 est dans la position ouverte et le pion 26 est agencé contre la butée d'obturation lorsque le volet 14 est dans la position d'obturation.

La position de la butée d'ouverture 24B et/ou de la position de la butée d'obturation 24C dépendent d'au moins un paramètre sélectionné dans la liste comprenant l'angle de rotation souhaitée du volet 14, la flèche du volet d'obturation 14, la position du volet 14 selon la première direction X, la position du volet 14 selon la troisième direction Z, la position du support 28 selon la deuxième direction Y, la position de la rainure de guidage 24 selon la seconde direction Y, la forme souhaitée de la peau extérieure, la largeur du volet d'obturation 14.

En particulier, il est défini une longueur de la rainure de guidage 24 comme étant la longueur de la surface de guidage 24A.

La longueur de la rainure 24 dépend d'au moins un paramètre compris dans la liste comprenant l'angle de rotation du volet 14, la flèche du volet 14, la longueur du volet d'obturation 14, la position du pion 26 coulissant dans la rainure de guidage 24, la position de la rainure de guidage 24 selon la deuxième direction Y.

Par exemple, le pion 26 est fixé entre deux pattes de fixation 34 faisant saillie d'une face du volet 14 et s'étendant en regard de la rainure de guidage 24.

Dans le présent exemple, le pion 26 comprend deux parties en regard l'une de l'autre selon la deuxième direction Y.

En variante, le pion 26 est formé d'une seule pièce.

En variante, le pion 26 est formé d'une seule pièce avec le volet 14.

Encore en variante le pion 26 est rapporté sur le volet 14.

Le pion 26 s'étend le long de la deuxième direction Y dans la rainure de guidage 24 et traverse la rainure de guidage 24. Autrement dit le pion 26 s'étend le long d'une direction parallèle à l'axe de pivotement P.

Le pion 26 est configuré pour coulisser dans la rainure de guidage 24.

Comme visible sur les figures 1 à 3, le dispositif d'obturation 10 comprend des pattes de support 27 de liaisons pivot additionnelles (non représentées) agencées de partet d'autre du système de guidage 16.

Ainsi, dans ce cas, les liaisons pivot additionnelles sont agencées entre chaque extrémité 14A, 14B du volet 14 et le système de guidage 16, dans une zone du volet 14 présentant une flèche inférieure à la flèche de la partie de volet 14 située dans la zone de flèche maximale 20.

De telles liaisons pivot additionnelles permettent d'accompagner le mouvement du volet 14 entre les positions ouverte et d'obturation et d'éviter tout blocage de ce mouvement qui pourrait par exemple survenir en cas de torsion du volet sur lui-même.

Ainsi, les liaisons pivot supplémentaires permettent d'améliorer la rotation des volets d'obturation 14.

En outre, les liaisons pivot supplémentaires permettent de contribuer au maintien des volets d'obturation 14 en position face aux efforts aérodynamiques.

Les liaisons pivot additionnelles sont ainsi particulièrement avantageuses pour un volet 14 de longueur importante.

En fonctionnement, lorsque le dispositif d'obturation 10 est dans la position d'obturation, le module de commande pilote le déplacement des volets 14 afin que ceux-ci pivotent dans leur position ouverte.

Lors du passage de la position d'obturation à la position ouverte, le pion 26 en butée contre la butée d'obturation 24C coulisse dans la rainure de guidage 24 le long de la surface de guidage 24A jusqu'à atteindre la butée d'ouverture 24B.

A contrario, lors du passage de la position ouverte à la position d'obturation, le pion 26 en butée contre la butée d'ouverture 24B coulisse dans rainure de guidage 24 le long de la surface de guidage 24A jusqu'à atteindre la butée d'obturation 24C.

Ainsi, le volet d'obturation 14 entraîne le mouvement du pion 26 dans la rainure de guidage 24 du système de guidage 16. Le pivotement du volet 14 met donc en œuvre le système de guidage 16, à savoir le déplacement du pion 26 dans la rainure de guidage 24.

Ainsi, le système de guidage 16 du système d'obturation 10 est adapté pour être mis en œuvre une fois que les volets d'obturation 14 pivotent ou, autrement dit, au cours du pivotement des volet 14.

En variante, la longueur d'au moins deux volets 14 est différente et/ou la courbure d'au moins deux volets 14 est différente.

La position de la zone de courbure 20 des volets 14 peut aussi varier.

Par exemple, la position peut être définie par des coordonnées spatiales x, y, z variant respectivement selon les axes X, Y, Z dans un repère O, X, Y, Z dont le centre O est situé sur une extrémité du support 28.

Encore en variante, la position des rainures de guidage 24 et des pions 26 peuvent varier d'un volet 14 à l'autre.

Encore en variante, la position de la butée d'ouverture 24B et de la butée d'obturation 24C peut varier d'un volet d'obturation 14 à l'autre.

Selon un mode de réalisation particulier du dispositif d'aération 8, les branches 32 présentent chacune une portion d'affaiblissement de matière. La portion d'affaiblissement est fusible en cas de choc avec un piéton.

En variante ou en complément, les volets d'obturation 14 présentent une portion d'affaiblissement de matière. La portion d'affaiblissement est fusible en cas de choc avec un piéton.

Le dispositif d'aération 8 est amélioré par rapport aux dispositifs d'aération connus.

En effet, le système de guidage 16 forme un point d'appui additionnel pour les volets 14 qui contribue à rigidifier l'ensemble du dispositif d'obturation 10.

Le point d'appui additionnel est particulièrement avantageux face aux efforts aérodynamiques.

En particulier, le point d'appui additionnel procure notamment un appui selon la direction X pour limiter les déformations des volets soumis aux efforts aérodynamiques.

En outre, le point d'appui additionnel est également particulièrement avantageux face aux efforts d'indentation réalisés par les constructeurs automobiles.

Ainsi, le point d'appui additionnel procuré par le système de guidage 16 entre les extrémités 14A, 14B des volets 14 offre une cinématique différente des liaisons pivots 22 et permet de sécuriser la cinématique des volets 14.

En outre, le système de guidage 16 permet de réduire l'encombrement selon première direction X à l'arrière des volets 14.

Il en résulte que le dispositif d'obturation 10 évite l'enrayement du mouvement des volets lorsque les volets 14 sont de grandes dimensions. Ainsi, le dispositif d'obturation 10 sécurise le mouvement des volets 14.

Le dispositif d'obturation 10 est particulièrement adapté pour des volets 14 de grandes dimensions.

En outre, le dispositif d'obturation 10 est particulièrement adapté aux volets d'obturation 14 courbés ou, autrement dit, incurvés car le système de guidage 16 permet d'éviter l'interférence entre supports d'arbre de pivotement et les volets 14 comme cela était le cas dans l'état de la technique.

En effet, le dispositif d'obturation 10 permet le remplacement des supports d'arbre de pivotement en zone centrale des volets 14 qui doit présenter une longueur importante dépendant de la flèche dans la zone centrale.

Or, comme indiqué précédemment des interférences peuvent se produire entre les volets 14 et ces supports d'arbres déportés en zone de flèche maximale 20 des volets 14.

Ainsi, le système de guidage 16 est plus compact que des systèmes de pivot comprenant un support d'arbre de pivotement et les parties du système de guidage 16 agencées entre deux volets 14 adjacents sont réduites par rapport aux systèmes de pivotement additionnels des dispositifs d'aération 10 de l'état de la technique.

Ainsi, le dispositif d'obturation 10 permet la rotation complète des volets d'obturation 14 sans interférence de supports d'arbre de pivotement et des volets 14 entre eux. De fait, les performances du dispositif d'obturation 10 sont améliorées.

En outre, le dispositif d'obturation10 selon l'invention est particulièrement compact et plus simple à fabriquer. En effet, un seul dispositif d'obturation 10 selon l'invention suffit notamment lorsqu'il est intégré dans la calandre du véhicule.

Par ailleurs, le dispositif d'obturation 10 est adaptable en fonction du style du véhicule et notamment en fonction du rendu souhaité de la peau extérieure 18.

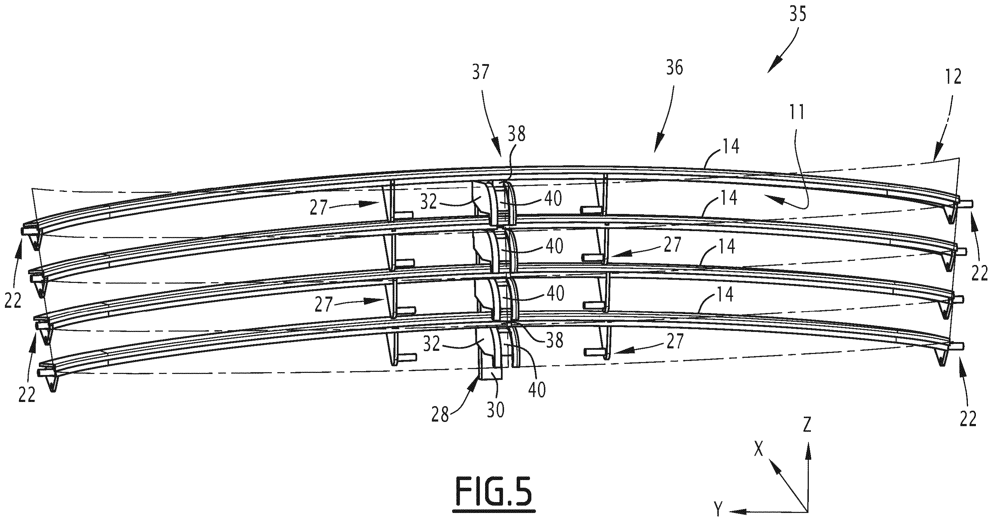

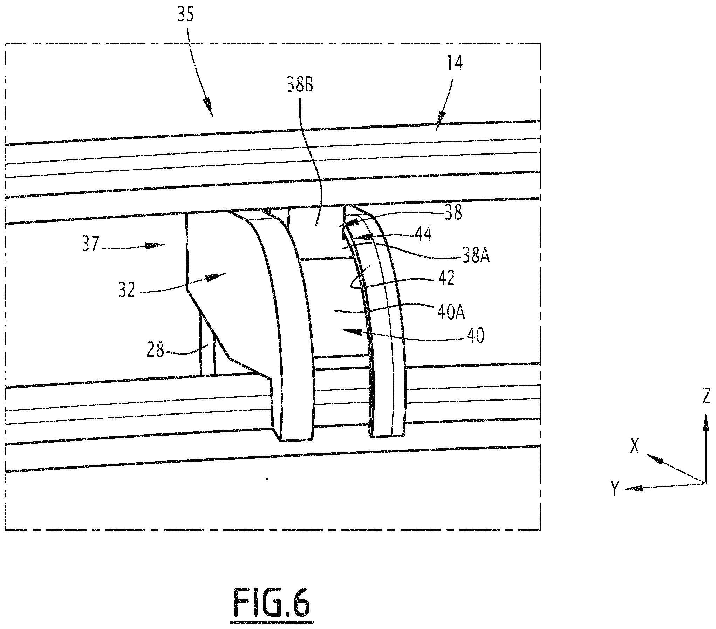

Un autre mode de réalisation du dispositif d'aération est représenté aux figures 5 et 6.

Seules les différences de mode de réalisation par rapport au mode de réalisation des figures 1 à 4 sont décrites.

En outre, les mêmes avantages que ceux présentés en référence au mode de réalisation des figures 1 à 4 s'appliquent à ce mode de réalisation.

Le dispositif d'aération 35 diffère du dispositif des figures 1 à 4 en ce qu'il comporte un dispositif d'obturation 36 avec un système de guidage 37 différent.

Le pion 38 présente la forme d'un champignon ou la forme d'un « T ».

Le pion 38 s'étend généralement le long de la première direction X, c'est-à-dire sensiblement perpendiculaire à l'axe de pivotement P.

Le pion 38 présente une tête 38A et un corps solidaire 38B de la tête 38A.

La tête 38A du pion 38 est en contact avec la surface de guidage 40A de la rainure de guidage 40. Le corps 38 B du pion 38 est fixé au volet d'obturation 14.

Dans le présent exemple, la longueur de la tête 38A est supérieure à la longueur du corps 38B.

La tête 38A et le corps 38B sont reliés l'une à l'autre par un épaulement.

En référence à la figure 5, pour chaque volet 14, la branche 32 délimite la rainure de guidage 40. La rainure de guidage 40 est pratiquée dans une épaisseur de la branche 32. La rainure de guidage 40 comporte deux parois sensiblement parallèles l'une à autre et sensiblement normales à la deuxième direction Y.

La forme de la rainure 40 est adaptée à la forme du pion 38.

En particulier, la rainure de guidage 40 présente une première portion 42 destinée à recevoir la tête 38A du pion 38 et une deuxième portion 44 en regard du corps 38B du pion 38.

La première portion 42 présente une longueur plus importante que la longueur de la deuxième portion 44.

Un épaulement de la rainure de guidage 40 relie la portion inférieure à la portion supérieure de la rainure de guidage 40.

L'épaulement de la rainure de guidage 40 permet de maintenir le pion 38 logé dans la rainure de guidage 40.

Comme dans le mode de réalisation décrit en référence aux figures 1 à 4, la surface de guidage 40A présente une butée d'ouverture et une butée d'obturation (non visibles sur les figures)

La forme de champignon ou de « T » du pion 38 avec la rainure de guidage 40 adaptée à la forme champignon ou de « T » permet de réduire les possibilités de déplacement des volets d'obturation 14 selon la deuxième direction Y et d'améliorer la gestion des jeux et affleurements des pièces du dispositif d'obturation 36.

En outre, la forme de champignon ou de « T » offre une surface d'appui importante du pion 38 dans la rainure de guidage 40 perpendiculaire au flux d'air lorsque les volets d'obturation 14 sont fermés.

Les dispositifs d'obturation selon l'invention permettent alors de réduire l'encombrement en zone centrale par rapport à un dispositif classique avec arbre de pivotement.

Les dispositifs d'obturation permettent de déplacer les volets 14 selon une direction combinant les première et troisième directions X, Z grâce au système de guidage en évitant les risques d'interférence entre les volets 14 et des supports d'arbre de pivotement comme cela était le cas dans l'état de la technique.

En particulier, le fait de pouvoir déplacer les volets 14 selon une direction combinant les première et troisième direction X, Z au moyen du pion et de la rainure de guidage permet, lorsque que les volets 14 sont dans la position d'obturation, d'obtenir une parfaite continuité entre l'environnement des volets (la peau de pare-chocs par exemple) et les volets 14. Ainsi, les volets 14 en position fermée sont affleurent (« flush » en anglais) avec l'environnement des volets 14.

En particulier, dans la position d'obturation, le système de guidage procure un point d'appui additionnel pour les volets afin pour limiter les déformations des volets 14 sous les efforts aérodynamiques.

En outre, le fait de pouvoir déplacer les volets dans une direction combinant les première direction X et troisième direction Z au moyen du pion et de la rainure de guidage permet, lorsque que les volets sont dans la position ouverte et selon la première, deuxième et/ou troisième directions X, Y, Z de l'axe de pivotement P, que les arêtes visibles des volets 14 soient alignés avec l'environnement des volets 14 (peau de pare-chocs par exemple).

En variante, les volets 14 peuvent ne pas être alignés avec l'environnement des volets 14

Ainsi, l'invention permet de positionner l'axe de pivotement P de manière personnalisée sur un véhicule en réduisant les risques d'interférence entre les volets 14.

Ainsi, le dispositif d'aération selon l'invention est adaptable pour tout type de véhicules.

## Revendications

1. Dispositif d'aération (8, 35) pour un véhicule comprenant un cadre (12) définissant une ouverture (11) et un dispositif d'obturation comprenant au moins un volet d'obturation (14) s'étendant selon une direction générale (Y) dans l'ouverture (11), le dispositif d'obturation (10, 36) étant mobile entre une position ouverte et une position d'obturation telle qu'une surface de passage de l'air au travers du dispositif d'aération (8, 35) est inférieure à la surface de passage de l'air lorsque le dispositif d'obturation (10, 36) est dans la position ouverte, le volet (14) étant mobile entre une position ouverte lorsque le dispositif d'obturation (10, 36) est dans la position ouverte et une position d'obturation lorsque le dispositif d'obturation (10, 36) est dans la position d'obturation,
le volet d'obturation (14) étant monté pivotant à chacune de ses extrémités (14A, 14B) sur le cadre (12) selon un axe de pivotement (P) sensiblement parallèle à ladite direction générale (Y) pour faire pivoter le volet d'obturation (14) entre la position ouverte et la position d'obturation,
le dispositif d'obturation (10, 35) comprend, en outre, ur système de guidage (16, 37) du volet d'obturation (14) agencé entre les deux extrémités (14A, 14B) du volet d'obturation (14), le système de guidage (16, 37) comprenant une rainure de guidage (24, 40) et un pion (26, 38) se déplaçant dans la rainure de guidage (24, 40) par coulissement entre la position ouverte et la position d'obturation,
le système de guidage (16, 37) comprend un support (28), le pion (26, 38) étant fixé à l'un parmi le volet d'obturation (14) ou le support (28) et la rainure de guidage (24, 40) étant ménagée dans l'autre parmi le support (28) ou le volet d'obturation (14), le support (28) étant fixé au cadre (12) à chacune de ses extrémités, et
**caractérisé en ce que** la rainure de guidage (24, 40) présente une forme courbe, notamment une forme concave,
et **en ce que** le volet d'obturation (14) présente une forme incurvée,
le volet d'obturation (14) présentant une forme courbe d'une extrémité à l'autre extrémité du volet d'obturation (14) selon la direction générale (Y) lorsque ce volet d'obturation (14) est dans la position ouverte.

2. Dispositif d'aération (8, 35) selon la revendication 1, dans lequel le volet d'obturation présente une zone de flèche maximale (20), le système de guidage (16, 37) étant agencé dans ladite zone de flèche maximale (20) du volet d'obturation (14).

3. Dispositif d'aération (8, 35) selon la revendication 1 ou 2, dans lequel le support (28) présente une zone d'affaiblissement de matière de telle sorte que ladite zone est fusible en cas de choc avec un élément extérieur au véhicule, tel qu'un piéton.

4. Dispositif d'aération (35) selon l'une quelconque des revendications précédentes, dans lequel le pion (26, 38) s'étend le long d'une direction sensiblement perpendiculaire à l'axe de pivotement.

5. Dispositif d'aération (8) selon l'une quelconque des revendications 1 à 3, dans lequel le pion (26, 38) s'étend le long d'une direction parallèle à l'axe de pivotement (P).

6. Dispositif d'aération (8, 35) selon l'une quelconque des revendications précédentes dans lequel chaque extrémité de la rainure de guidage (24, 40) définit une butée d'ouverture (24B) et une butée d'obturation (24C) du volet d'obturation (14), le pion (26, 38) étant agencé contre la butée d'ouverture (24B) lorsque le volet d'obturation (14) est dans la position ouverte et le pion (26, 38) étant agencé contre la butée d'obturation (24C) lorsque le volet d'obturation (14) est dans la position d'obturation.

7. Dispositif d'aération (8, 35) selon l'une quelconque des revendications précédentes, dans lequel le dispositif d'obturation (10, 36) comprend une pluralité de volets d'obturation (14) et dans lequel au moins deux rainures de guidage (24, 40) du système de guidage desdits volets d'obturation (14) sont différentes l'une de l'autre.

8. Dispositif d'aération (8, 35) selon la revendication 6, dans lequel, pour chaque volet d'obturation (14), chaque extrémité de la rainure de guidage (24, 40) définit respectivement une butée d'ouverture (24B) et une butée d'obturation (24C) du volet d'obturation (14), le pion (26, 38) étant agencé contre la butée d'ouverture (24B) lorsque le volet d'obturation (14) est dans la position ouverte et le pion (26, 38) étant agencé contre la butée d'obturation (24C) lorsque le volet d'obturation (14) est dans la position d'obturation,
la forme de la rainure de guidage (24, 40) et/ou la position de la butée d'obturation (24C) et/ou la position de la butée d'ouverture (24B) dépendant d'une flèche (F) maximale du volet d'obturation (14).

## Patentansprüche

1. Belüftungsvorrichtung (8, 35) für ein Fahrzeug, umfassend einen Rahmen (12), der eine Öffnung (11) definiert, und eine Verschlussvorrichtung, umfassend mindestens einer Verschlussklappe (14), die sich in einer allgemeinen Richtung (Y) in der Öffnung (11) erstreckt, wobei die Verschlussvorrichtung (10, 36) zwischen einer offenen Position und einer Verschlussposition bewegbar ist, sodass eine Luftdurchlassfläche durch die Belüftungsvorrichtung (8, 35) kleiner ist als die Luftdurchlassfläche, wenn die Verschlussvorrichtung (10, 36) in der offenen Position ist, wobei die Klappe (14) zwischen einer offenen Position, wenn die Verschlussvorrichtung (10, 36) in der offenen Position ist, und einer Verschlussposition, wenn die Verschlussvorrichtung (10, 36) in der Verschlussposition ist, bewegbar ist,
wobei die Verschlussklappe (14) an jedem ihrer Enden (14A, 14B) schwenkbar um eine Schwenkachse (P), die im Wesentlichen parallel zu der allgemeinen Richtung (Y) ist, an dem Rahmen (12) montiert ist, um die Verschlussklappe (14) zwischen der offenen Position und der Verschlussposition zu schwenken,
die Verschlussvorrichtung (10, 35) ferner ein Führungssystem (16, 37) der Verschlussklappe (14) umfasst, das zwischen den zwei Enden (14A, 14B) der Verschlussklappe (14) angeordnet ist, das Führungssystem (16, 37) umfassend eine Führungsnut (24, 40) und einen Stift (26, 38), der sich in der Führungsnut (24, 40) durch Gleiten zwischen der offenen Position und der Verschlussposition bewegt,
das Führungssystem (16, 37) einen Träger (28) umfasst, wobei der Stift (26, 38) entweder an der Verschlussklappe (14) oder dem Träger (28) befestigt ist und die Führungsnut (24, 40) in dem anderen von dem Träger (28) oder der Verschlussklappe (14) ausgebildet ist, wobei der Träger (28) an jedem seiner Enden an dem Rahmen (12) befestigt ist, und
**dadurch gekennzeichnet,**
**dass** die Führungsnut (24, 40) eine gekrümmte Form, insbesondere eine konkave Form, aufweist,
und **dass** die Verschlussklappe (14) eine gekrümmte Form aufweist,
wobei die Verschlussklappe (14) eine gekrümmte Form von einem Ende zu dem anderen Ende der Verschlussklappe (14) entlang der allgemeinen Richtung (Y) aufweist, wenn die Verschlussklappe (14) in der offenen Position ist.

2. Belüftungsvorrichtung (8, 35) nach Anspruch 1, wobei die Verschlussklappe einen Bereich maximaler Durchbiegung (20) aufweist, wobei das Führungssystem (16, 37) in dem Bereich maximaler Durchbiegung (20) der Verschlussklappe (14) angeordnet ist.

3. Belüftungsvorrichtung (8, 35) nach Anspruch 1 oder 2, wobei der Träger (28) einen materialschwächenden Bereich aufweist, sodass dieser Bereich bei einem Aufprall auf ein Element außerhalb des Fahrzeugs, wie z. B. einen Fußgänger, verformbar ist.

4. Belüftungsvorrichtung (35) nach einem der vorherigen Ansprüche, wobei sich der Stift (26, 38) entlang einer Richtung erstreckt, die im Wesentlichen senkrecht zu der Schwenkachse ist.

5. Belüftungsvorrichtung (8) nach einem der Ansprüche 1 bis 3, wobei sich der Stift (26, 38) entlang einer Richtung parallel zu der Schwenkachse (P) erstreckt.

6. Belüftungsvorrichtung (8, 35) nach einem der vorherigen Ansprüche, wobei jedes Ende der Führungsnut (24, 40) einen Öffnungsanschlag (24B) und einen Verschlussanschlag (24C) der Verschlussklappe (14) definiert, wobei der Stift (26, 38) an dem Öffnungsanschlag (24B) angeordnet ist, wenn die Verschlussklappe (14) in der offenen Position ist, und der Stift (26, 38) an dem Verschlussanschlag (24C) angeordnet ist, wenn die Verschlussklappe (14) in der Verschlussposition ist.

7. Belüftungsvorrichtung (8, 35) nach einem der vorherigen Ansprüche, wobei die Verschlussvorrichtung (10, 36) eine Vielzahl von Verschlussklappen (14) umfasst und wobei mindestens zwei Führungsnuten (24, 40) des Führungssystems der Verschlussklappen (14) voneinander verschieden sind.

8. Belüftungsvorrichtung (8, 35) nach Anspruch 6, wobei jedes Ende der Führungsnut (24, 40) für jede Verschlussklappe (14) jeweils einen Anschlag zum Öffnen (24B) und einen Anschlag zum Verschließen (24C) der Verschlussklappe (14) definiert, wobei der Stift (26, 38) an dem Öffnungsanschlag (24B) angeordnet ist, wenn die Verschlussklappe (14) in der offenen Position ist, und der Stift (26, 38) an dem Verschlussanschlag (24C) angeordnet ist, wenn die Verschlussklappe (14) in der Verschlussposition ist,
wobei die Form der Führungsnut (24, 40) und/oder die Position des Verschlussanschlags (24C) und/oder die Position des Öffnungsanschlags (24B) von einer maximalen Durchbiegung (F) der Verschlussklappe (14) abhängt.

## Claims

1. A device (8, 35) for ventilating a vehicle comprising a frame (12) defining an opening (11) and a closing device comprising at least one closing flap (14) extending in a general direction (Y) in the opening (11), the closing device (10, 36) being movable between an open position and a closing position such that a passage surface for the air through the ventilating device (8, 35) is smaller than the passage surface for the air when the closing device (10, 36) is in the open position, the flap (14) being movable between an open position when the closing device (10, 36) is in the open position and a closing position when the closing device (10, 36) is in the closing position,
the closing flap (14) being mounted pivoting at each of its ends (14A, 14B) on the frame (12) along a pivot axis (P) substantially parallel to said general direction (Y) in order to pivot the closing flap (14) between the open position and the closed position,
the closing device (10, 35) further comprising a system (16, 37) for guiding the closing flap (14) arranged between the two ends (14A, 14B) of the closing flap (14), the guide system (16, 37) comprising a guide slot (24, 40) and a pin (26, 38) moving in the guide slot (24, 40) by sliding between the open position and the closed position,
the guide system (16, 37) comprising a support (28), the pin (26, 38) being fastened to one among the closing flap (14) or the support (28) and the guide slot (24, 40) being arranged in the other among the support (28) or the closing flap (14), the support (28) being fastened to the frame (12) at each of its ends, and
**characterized in that** the guide slot (24, 40) has a curved shape, in particular a concave shape,
and **in that** the closing flap (14) has a curved shape,
the closing flap (14) having a curved shape from one end to the other end of the closing flap (14) in the general direction (Y) when the closing flap (14) is in the open position.

2. The ventilating device (8, 35) according to claim 1, wherein the closing flap has an area of maximum deflection (20), the guide system (16, 37) being arranged in said area of maximum deflection (20) of the closing flap (14).

3. The ventilating device (8, 35) according to claim 1 or 2, wherein the support (28) has a weak area such that said area is fusible in case of impact with an element outside the vehicle, such as a pedestrian.

4. The ventilating device (35) according to any one of the preceding claims, wherein the pin (26, 38) extends along a direction substantially perpendicular to the pivot axis.

5. The ventilating device (8) according to any one of claims 1 to 3, wherein the pin (26, 38) extends along a direction parallel to the pivot axis (P).

6. The ventilating device (8, 35) according to any one of the preceding claims, wherein each end of the guide slot (24, 40) defines an opening stop (24B) and a closing stop (24C) of the closing flap (14), the pin (26, 38) being arranged against the opening stop (24B) when the closing flap (14) is in the open position and the pin (26, 38) being arranged against the closing stop (24C) when the closing flap (14) is in the closed position.

7. The ventilating device (8, 35) according to any one of the preceding claims, wherein the closing device (10, 36) comprises a plurality of flaps (14) and wherein at least two guide slots (24, 40) of the guiding system of said closing flaps (14) are different from one another.

8. The ventilating device (8, 35) according to claim 6, wherein, for each closing flap (14), each end of the guide slot (24, 40) respectively defines an opening stop (24B) and a closing stop (24C) of the closing flap (14), the pin (26, 38) being arranged against the opening stop (24B) when the closing flap (14) is in the open position and the pin (26, 38) being arranged against the closing stop (24C) when the closing flap (14) is in the closed position,
the shape of the guide slot (24, 40) and/or the position of the closing stop (24C) and/or the position of the opening stop (24B) depending on a maximum deflection (F) of the closing flap (14).
